# EUROPEAN PATENT SPECIFICATION

(11) **EP 2 342 250 B1**
(45) Date of publication and mention of the grant of the patent: **15.08.2012**
(21) Application number: 09792144.9
(22) Date of filing: 02.09.2009
(51) Int. Cl.: C08G 18/48, C08G 18/66, C09D 175/08, D06M 15/564

(54) **TPU COMPOSITIONS FOR MELT COATING PROCESSES**
TPU-ZUSAMMENSETZUNGEN FÜR SCHMELZBESCHICHTUNGSVERFAHREN
COMPOSITIONS DE TPU POUR PROCÉDÉS DE REVÊTEMENT À L ÉTAT FONDU

(30) Priority: 24.09.2008 US 99690 P
(43) Date of publication of application: 13.07.2011
(73) Proprietor: Lubrizol Advanced Materials, Inc., Cleveland, OH 44141-3247 (US)
(72) Inventor: WIESSNER, Robert, J., NL-5531XG Bladel (NL)
(74) Representative: von Kreisler Selting Werner
(86) International application number: PCT/US2009/055651
(87) International publication number: WO 2010/036490

(56) References cited:
- GB-A- 2 021 603
- US-A- 5 331 044
- US-A- 5 840 812

## Description

### FIELD Of THE INVENTION

The present invention relates to thermoplastic polyurethane (TPU) compositions comprising a blend of two or more fully formed TPU polymers. The two or more TPU polymers used in the blend have different melt characteristics. The TPU compositions are useful for use in melt coating processes where the TPU composition is coated on a fabric substrate or to make a film from the TPU composition.

### BACKGROUND OF THE INVENTION

Thermoplastic polyurethane (TPU) polymers have found many industrial uses because of their excellent properties, such as strength, elongation, toughness, abrasion resistance, and ease of processing. One such use is in the making of films to melt coat fabrics for various end use applications.

The melt coating processes frequently used is either an extrusion melt coating or a calender melt coating process. Current TPU polymers used in these processes have some limitations such as when one wishes to coat a fabric substrate with a thin coating, having less than 150 µm layer of TPU. Also, frequently the TPU coating will need to be processed through an embossing step to correct matt and glossy areas of the coating.

Processors desire to perform their melt coating process in one pass. If low coating weight is desired with prior TPUs, often a second step of embossing is required to disguise glossy and matt streaks caused by the prior art TPUs. Thick coatings (greater than 350 µm) of prior art TPU can also present problems in having a defect free coating.

Processors of TPU for melt coating also desire to operate their equipment at higher speeds as well as with lower coating weight for greater efficiency and cost savings.

It would be desirable to have a TPU composition that could be processed to achieve a lower coating thickness, such as 25 µm to 150 µm, as well as a thick coating of from 300 to 400 µm, while increasing the processing speed. Of course, the TPU composition should also be capable of making medium thickness coatings, such as 150 to 300 µm, as well as the thin and thick coating. Quality films that could be made with one pass are also desirable.

GB-A-2021603 discloses thermoplastic polyurethane compositions which represent mixtures of poly(tetrahydrofuran)-based TPU and polyester-based TPU and are melt-extruded to form a thin sheet on a substrate.

US-A-5,840,812 discloses a mixture of two different thermoplastic polyurethanes which are prepared from 4,4'-diphenylmethane diisocyanate, butanediol and poly(ethylene oxide)based polydiol having a molecular weight of 1000 g/mol, respectively, poly(propylene oxide)based polydiol having a molecular weight of 1500 g/mol, respectively, a poly(butyleneadipate)diol having a molecular weight of 2000 g/mol. Said TPU's are melted with an extruder via a blown film die, thus, which represents an extrusion blown film process. Transparent thin (10 to 100 micrometer) films are thus obtained. Said films represent flat materials that are used as coverings for fabrics such as breathable textiles by means of extrusion coating.

### SUMMARY OF THE INVENTION

This invention relates to a thermoplastic polyurethane (TPU) composition comprising a blend of two or more fully formed TPU polymers, said blend comprising
a first fully formed TPU polymer and a second fully formed TPU polymer; wherein both said first TPU polymer and said second TPU polymer have a soft segment and a hard segment and said first and second TPU polymers are both derived from the reaction of:
(a) at least one hydroxyl terminated intermediate to form said soft segment;
(b) at least one chain extender; and
(c) at least one diisocyanate, wherein said hard segment is formed by said chain extender and said diisocyanate; and wherein said first and said second fully formed TPU polymers are both polyether TPU polymers, and wherein said first fully formed TPU polymer was made with a 2000 Mn hydroxy terminated intermediate and said second fully formed TPU polymer was made with 1000 Mn hydroxy terminated intermediate, and said composition is formed from a 50/50 blend of said first and said second fully formed TPU polymers.
This invention further relates to a process for producing a thermoplastic polyurethane film by either melt coating or calendaring the TPU composition as described above.
Preferred embodiments of the present invention are apparent from the dependent claims.

The first TPU polymer and the second TPU polymer are both made from the reaction of (a) at least one hydroxy terminated intermediate, known as a. polyol, (b) at least one chain extender, and (c) at least one diisocyanate. Both TPU polymers have a soft segment formed from the polyol and a hard segment formed from the chain extender reacted with the diisocyanate.

The soft segment of the two TPU polymers is different. The difference in soft segment can be made by using a different number average molecular weight polyol. The difference in Mₙ of the polyols is 1000 Daltons.

It is an object of the present invention to have a TPU composition which can be used to melt coat a fabric substrate and to have the TPU composition exhibit a broad process window. This allows the melt coating to be accomplished with a low coating weight, that is, having a coating thickness as thin as 25 µm. The melt coating process can be run at higher speeds and good coating quality can be obtained in one pass through the coating process.

To accomplish this objective, a TPU composttion having a blend of at least two different TPU polymers are used, as described above.

It is also an object of the present invention to produce a coated fabric article by using the TPU composition having a blend of at least two different TPU polymers. The coated fabric can be used to produce flexible containers, inflatable life vests and rafts, conveyor belts, inflatable air mattresses, printing blankets and adhesive laminates.

### DETAILED DESCRIPTION OF THE INVENTION

The thermoplastic polyurethanes. (TPU for short) compositions of the present invention comprise at least two fully formed TPU polymers. A fully formed TPU polymer means a TPU polymer that has been made by the reaction of at least one hydroxyl terminated intermediate (also known as a polyol), at least one chain extender, and at least one diisocyanate. The preceding reactants are reacted to form a TPU polymer having a weight average molecular weight of at least 50,000 Daltons. The TPU polymer is cut into pellets, ground in powder or formed into other small size pieces.

The TPU composition of the present invention is formed by blending two or more fully formed TPU polymers. Preferably, two TPU polymers in pellet form are used and the pellets are dry blended together to create a blend of the pellets to form the TPU composition of this invention.

The TPU polymers used in this invention can be any conventional TPU polymer that is known to the art and in the literature as long as the TPU polymer has adequate molecular weight. The TPU polymer is generally prepared by reacting a diisocyanate with a hydroxyl terminated polyether intermediate, with one or more chain extenders, all of which are well known to those skilled in the art.

The hydroxyl terminated polyester intermediate, if present, is generally a linear polyester having a number average molecular weight (Mn) of from 500 to 10,000 Daltons, desirably from 700 to 5,000, and preferably from 700 to 4,000, an acid number generally less than 1.3 and preferably less than 0.8. The molecular weight is determined by assay of the terminal functional groups and is related to the number average molecular weight. The polymers are produced by (1) an esterification reaction of one or more glycols with one or more dicarboxylic acids or anhydrides or (2) by transesterification reaction, i.e., the reaction of one or more glycols with esters of dicarboxylic acids. Mole ratios generally in excess of more than one mole of glycol to acid are preferred so as to obtain linear chains having a preponderance of terminal hydroxyl groups. Suitable polyester intermediates also include various lactones such as polycaprolactone typically made from ,-caprolactone and a bifunctional initiator such as diethylene glycol. The dicarboxylic acids of the desired polyester can be aliphatic, cycloaliphatic, aromatic, or combinations thereof. Suitable dicarboxylic acids which may be used alone or in mixtures generally have a total of from 4 to 15 carbon atoms and include: succinic, glutaric, adipic, pimelic, suberic, azelaic, sebacic, dodecanedioic, isophthalic, terephthalic, cyclohexane dicarboxylic, and the like. Anhydrides of the above dicarboxylic acids such as phthalic anhydride, tetrahydrophthalic anhydride, or the like, can also be used. Adipic acid is the preferred acid. The glycols which arc reacted to form a desirable polyester intermediate can be aliphatic, aromatic, or combinations thereof, and have a total of from 2 to 12 carbon atoms, and include ethylene glycol, 1,2-propanediol, 1,3-propanediol, 1,3-butanediol, 1,4-butanediol, 1,5-pentanediol, 1,6-hexanediol, 2,2-dimethyl-1,3-propanediol, 1,4-cyclohexanedimethanol, decamethylene glycol, dodecamethylene glycol, and the like, 1,4-butanediol is the preferred glycol.

Hydroxyl terminated polyether intermediates are polyether polyols derived from a diol or polyol having a total of from 2 to 15 carbon atoms, preferably an alkyl diol or glycol which is reacted with an ether comprising an alkylene oxide having from 2 to 6 carbon atoms, typically ethylene oxide or propylene oxide or mixtures thereof. For example, hydroxyl functional polyether can be produced by first reacting propylene glycol with propylene oxide followed by subsequent reaction with ethylene oxide. Primary hydroxyl groups resulting from ethylene oxide are more reactive than secondary hydroxyl groups and thus are preferred. Useful commercial polyether polyols include poly(ethylene glycol) comprising ethylene oxide reacted with ethylene glycol, poly(propylene glycol) comprising propylene oxide reacted with propylene glycol. poly(tetramethyl glycol) comprising water reacted with tetrahydrofuran (PTMG). Polytetramethylene ether glycol (PTMEG) is the preferred polyether intermediate. Polyether polyols further include polyamide adducts of an alkylene oxide and can include, for example, ethylenediamine adduct comprising the reaction product of ethylenediamine and propylene oxide, diethylenetriamine adduct comprising the reaction product of diethylenetriamine with propylene oxide, and similar polyamide type polyether polyols. Copolyethers can also be utilized in the current invention. Typical copolyethers include the reaction product of THF and ethylene oxide or THF and propylene oxide. These are available from BASF as Poly THF B, a block copolymer, and poly THF R, a random copolymer. The various polyether intermediates generally have a number average molecular weight (Mn), as determined by assay of the terminal functional groups which is an average molecular weight, of from 500 to 10,000 Daltons, desirably from 500 to 5,000, and preferably from 700 to 3,000.

The polycarbonate-based polyurethane polymer, if present, is prepared by reacting a diisocyanate with a blend of a hydroxyl terminated polycarbonate and a chain extender. The hydroxy terminated polycarbonate can be prepared by reacting a glycol with a carbonate.

U.S. Patent No. 4,131,731 discloses hydroxyl terminated polycarbonates and their preparation. Such polycarbonates are linear and have terminal hydroxyl groups with essential exclusion of other terminal groups. The essential reactants are glycols and carbonates. Suitable glycols are selected from cycloaliphatic and aliphatic diols containing 4 to 40, and preferably 4 to 12 carbon atoms, and from polyoxyalkylene glycols containing 2 to 20 alkoxy groups per molecular with each alkoxy group containing 2 to 4 carbon atoms. Diols suitable for use in the present invention include aliphatic diols containing 4 to 12 carbon atoms such as butanediol-1,4, pentanediol-1,4, neopentyl glycol, hexanediol-1,6, 2,2,4-trimethylhexanediol-1,6, decanediol-1,10, hydrogenated dilinoleylglycol, hydrogenated dioleylglycol; and cycloaliphatic diols such as cyclohexanediol-1,3, dimethylolcyclohexane-1,4, cyclohexanediol-1,4, dimethylolcyclohexane-1,3,1,4-endomethylene-2-hydroxy-5-hydroxymethyl cyclohexane, and polyalkylene glycols. The diols used in the reaction may be a single diol or a mixture of diols depending on the properties desired in the finished product.

Polycarbonate intermediates which are hydroxyl terminated are generally those known to the art and in the literature. Suitable carbonates are selected from alkylene carbonates composed of a 5 to 7 membered ring having the following general formula: 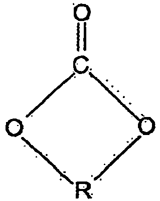 were R is a saturated divalent radical containing 2 to 6 linear carbon atoms. Suitable carbonates for use herein include ethylene carbonate, trimethylene carbonate, tetramethylene carbonate, 1,2-propylene carbonate, 1,2-butylene carbonate, 2,3-butylene carbonate, 1,2-ethylene carbonate, 1,3-pentylene carbonate, 1,4-pentylene carbonate, 2,3-pentylene carbonate, and 2,4-pentylene carbonate.

Also, suitable herein are dialkylcarbonates, cyclo-aliphatic carbonates, and diarylcarbonates. The dialkylcarbonates can contain 2 to 5 carbon atoms in each alkyl group and specific examples thereof are diethylcarbonate and dipropylcarbonate. Cycloaliphatic carbonates, especially dicycloaliphatic carbonates, can contain 4 to 7 carbon atoms in each cyclic structure, and there can be one or two of such structures. When one group is cycloaliphatic, the other can be either alkyl or aryl. On the other hand, if one group is aryl, the other can be alkyl or cycloaliphatic. Preferred examples of diarylcarbonates, which can contain 6 to 20 carbon atoms in each aryl group, are diphenylcarbonate, ditolylcarbonate, and dinaphthylcarbonate.

The reaction is carried out by reacting a glycol with a carbonate, preferably an alkylene carbonate in the molar range of 10:1 to 1:10, but preferably 3:1 to 1:3 at a temperature of 100°C to 300°C and at a pressure in the range of 13.3 Pa to 39.99 kPa 0.1 to 300 mm of mercury) in the presence or absence of an ester interchange catalyst, while removing low boiling glycols by distillation.

More specifically, the hydroxyl terminated polycarbonates are prepared in two stages. In the first stage, a glycol is reacted with an alkylene carbonate to form a low molecular weight hydroxyl terminated polycarbonate. The lower boiling point glycol is removed by distillation at 100°C to 300°C, preferably at 154°C to 250°C, under a reduced pressure of 133 kPa to 3.99 kPa (10 to 30 mm Hg), preferably 6.67 kPa to 26.66 kPa (50 to 200 mm Hg). A fractionating column is used to separate the by-product glycol from the reaction mixture. The by-product glycol is taken off the top of the column and the unreacted alkylene carbonate and glycol reactant are returned to the reaction vessel as reflux. A current of inert gas or an inert solvent can be used to facilitate removal of by-product glycol as it is formed. When amount of by-product glycol obtained indicates: that degree of polymerization of the hydroxyl terminated polycarbonate is in the range of 2 to 10, the pressure is gradually reduced to 13.3 Pa to 1.33 kPa (0. 1 to 10 mm Hg) and the unreacted glycol and alkylene carbonate are removed. This marks the beginning of the second stage of reaction during which the low molecular weight hydroxyl terminated polycarbonate is condensed by distilling off glycol as it is formed at 100°C to 300°C, preferably 150°C to 250°C and at a pressure of 13.3 Pa to 1.33 kPa (0.1 to 10 mm Hg) until the desired molecular weight of the hydroxyl terminated polycarbonate is attained. Molecular weight (Mn) of the hydroxyl terminated polycarbonates can vary from 500 to 10,000 but in a. preferred embodiment, it will be in the range of 500 to 2500.

Suitable extender glycols (i.e., chain extenders) are lower aliphatic or short chain glycols having from 2 to 10 carbon atoms and include for instance ethylene glycol, diethylene glycol, propylene glycol, dipropylene glycol, 1,4-butanediol, 1,6-hexanediol, 1,3-butanediol, 1,5-pentanediol, 1,4-cyclohexanedimethanol hydroquinone di(hydroxyethyl) ether, neopentyglycol, and the like, with 1,4-butanediol being preferred.

The desired TPU polymer used in the TPU composition of this invention is generally made from the above-noted polyether intermediates which is further reacted with a polyisocyanate, preferably a diisocyanate, along with extender glycol desirably in a so-called one-shot process or simultaneous coreaction of polyether intermediate, diisocyanate, and extender glycol to produce a high molecular weight linear TPU polymer. The preparation of the macroglycol is generally well known to the art and to the literature and any suitable method may be used. The weight average molecular weight (Mw) of the TPU polymer is generally 50,000 to 800,000, and preferably from 70,000 to 250,000 Daltons. The equivalent weight amount of diisocyanate to the total equivalent weight amount of hydroxyl containing components, that is the hydroxyl terminated polyether, and chain extender glycol, is from 0.95 to 1.10, desirably from 0,96 to 1.02, and preferably from 0.97 to 1.005. Suitable diisocyanates include aromatic diisocyanates such as: 4,4'-methylenebis-(phenyl isocyanate) (MDI); m-xylylene diisocyanate (XDI), phenylene-1,4-diisocyanate, naphthalene-1,5-diisocyanate, diphenylmethane-3,3'-dimethoxy-4,4'-diisocyanate and toluene diisocyanate (TDI); as well as aliphatic diisocyanates such as isophorone diisocyanate (IPDI), 1,4-cyclohexyl diisocyanate (CHDI), decane-1,10-diisocyanate, and dicyclohexylmethane-4,4'-diisocyanate. The most preferred diisocyanate is 4,4'-methylenebis(phenyl isocyanate), i.e., MDI. When a higher molecular weight TPU polymer is desired, it can be achieved by using small amount of a cross linking agent having a functionality greater than 2.0 to induce cross linking. The amount of cross linking agent used is preferably less than 2 mole percent of the total moles of chain extender, and more preferably less than 1 mole percent. A particularly desirable method to increase the molecular weight in the preferred TPU polymer is to replace less than 1 mole percent of the 1,4-butanediol chain extender with trimethylol propane (TMP),

In the one-shot polymerization process which generally occurs in situ, a simultaneous reaction occurs between three components, that is, the one or more intermediates, the one or more diisocyanates, and the one or more extender glycols, with the reaction generally being initiated at temperatures of from 100°C to 120°C. Inasmuch as the reaction is exothermie, the reaction temperature generally increases to 220°C-250°C.

The TPU polymers in the TPU compositions of this invention have a weight average molecular weight (Mw), as measured according to gel permeation chromatography (GPC) against polystyrene standard, of from 50,000 to 800,000 Daltons, preferably from 70,000 to 250,000 Daltons.

The TPU composition comprises a blend of two or more TPU polymers, preferably two TPU polymers as described above. Both TPU polymers used are fully formed TPU polymers, that is they each have a weight average molecular weight of 50,000 Daltons or greater. The two TPU polymers are different polymers. The difference in the TPU polymers is a difference in the number average molecular weight of the soft segment (polyol) of the TPUs. The difference between the molecular weight of the polyol used to make the TPUs is 1000 Daltons.

In TPU polymers, a higher polyol molecular weight gives greater degree of phase separation between the hard block and the soft block of the polymer. The hard block will be better defined and cause higher melting characteristics. The Tc will be sharper and higher and the Tg will be lower with a higher Mn polyol. It is believed that because the TPU polymers used in the TPU composition are different, they have different melt properties. Because the TPU, polymers have different melt properties, they are somewhat incompatible from a melt standpoint and this feature leads to the good processing at low coating weight. The different melt properties of the TPU polymers allow the composition to be processed in a melt coating at a lower coating weight and at faster speeds. The different melt properties of the TPU polymers is achieved by using different Mn polyols when making the TPUs, as described above.

The TPU composition of this invention is made by blending a first fully formed TPU polymer with a second fully formed TPU polymer. The first and second TPU polymer can each be made and pelletized into pellet from. The pellets of each TPU polymer can be dry blended to form the TPU composition. The two polymers could also be mixed together in a melt mixing machine, such as an extruder, and the mixture be pelletized to form the TPU composition in pellet form.

The TPU composition, either in the form of a blend of pellets of both TPU polymers or as a homogeneous pellet containing both TPU polymers is fed to a melt coating equipment. The melt coating equipment can be any of those known to those skilled in the art of melt coating, such as a calender or extrusion melt coating. The extrusion flat die process or extrusion blown film process can be used to achieve an unsupported film as thin as 25 µm. The thin film can be applied to fabric with heat and pressure or used in other film applications. The TPU composition is melt processed through the melt processing equipment to form a film which can be collected in the form of a film or preferably applied hot to a fabric substrate, to create a TPU coated fabric.

The coating thickness is usually from 25 µm to 400 µm, preferably from 90 µm to 350 µm.

The coated fabric can be used to make flexible containers, inflatable life vests, inflatable rafts, conveyor belts, inflatable air mattresses, printing blankets, adhesive laminates, and the like.

The fabric that can be coated with the TPU composition of this invention can be any of the normal fabrics, such as organic or inorganic fabrics. Examples of organic fabrics include nylon, polyester, polypropylene, and carbon. Examples of inorganic fabrics include glass and steel.

It is quite surprising that the blend of TPU polymers processed even better than either TPU polymer individually. Also, when a single TPU polymer was made by mixing the polyols to arrive at a single TPU polymer which had the same composition as the blend of two TPU polymers, the single TPU polymer did not process in the melt coating process as well as the blend TPU composition of this invention.

The TPU composition can contain other ingredients, other than TPU polymers. Ingredients such as coloring agents, flame retardants, UV and heat stabilizers, wax, fillers, and the like, can be added to the TPU composition. The addition of ingredients can be made to one or both of the TPU polymers when they are being made or can be added during the melt processing of the blend of the two TPU polymers to form the TPU, composition.

The invention will be better understood by referring to the following examples.

### EXAMPLE

Three separate TPU polymers were produced by the one-shot process as follows:
- TPU Polymer 1 -: was a polyether TPU, made by reacting a 2000 Mn PTMEG polyol, 1,4-butanediol, and MDI. The polymer produced had a Mw of 120,000 Daltons and a Shore A durometer of 75.
- TPU Polymer 2 -: was a polyether TPU, made by reacting a 1000 Mn PTMEG polyol, 1,4-butanediol, and MDI. The polymer produced had a Mw of 120,000 Daltons and a Shore A durometer of 82.
- TPU, Polymer 3 -: was a polyester TPU, made by reacting a 1000 Mn polybutylene adipate polyol, ethylene glycol, and MDI. The polymer had a Mw of 110,000 Daltons and a Shore A durometer of 70.
The TPU polymers (1-3) were evaluated individually and as blends for melt processing as shown below.

### EXAMPLES 1-6 AND COMPARATIVE EXAMPLES 7-9

TPU blends were created by dry blending pellets of the TPU polymers. The ratio (by weight) of the 6 blends are shown in Table 1 below as well as 3 comparative examples with only 1 TPU polymer:

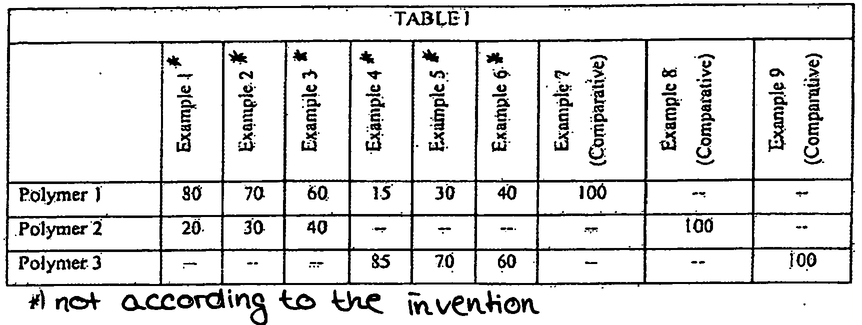

The blends (Examples 1-6) and comparative single polymers comparative. Examples 7-9) were evaluated in a pilot extruder-melt roll coating line to determine the processability of the blends. The extruder used was a co-rotating twin screw with a 35 L/D screw. The melt-roll coater used was a 2 bowl inclined, 80 cm wide. The extruder temperature profile was 175°C to 160°C, and the melt coater bowl temperature was 140°C to 160°C. The coat width was set at 50 cm.

The blends and the comparative (single polymer) examples were evaluated for (a) stable melt viscosity and strength to facilitate conveyance of an extruded melt rope to the 2 bowl melt roll coater, (b) the nip-pressure to obtain a coal thickness of 100 g/m² (90µm) at 5 m/min. coating speed, and (c) the % increase in coating weight as coating speed was increased from 5 m/mm. to 8 m/mm, and 12 m/min.

The results are shown in Table II below:

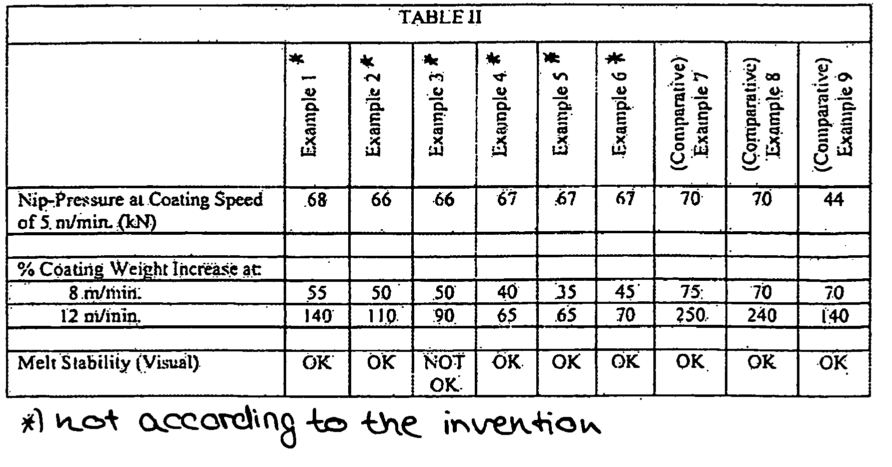

### Discussion of Results

From the data, it can be seen that all of the Examples, except Example 3, extrude and appear as stable, easy conveyable melts. When the coating speed is increased at a fixed nip pressure, the coating weight increases. The coat weight increase is another measure for the melt elasticity of the TPUs and a processability indicator. Comparative Examples 7 and 8 were blended to form Examples 1, 2 and 3. It can be seen from the data that Examples 1, 2 and 3 had a much less increase in the coating weight as the speed was increased, compared to the Comparative Examples 7 and 8.

### EXAMPLE 10 (not according to the invention)

In this Example 10, the blend of Example 2 (70% polymer 1 and 30% polymer 2) was scaled up to further evaluate processability in an extrusion-melt coating line. A co-rotating, 28 L/D ratio twin screw extruder was used with a 220 cm wide, 2 bowl inclined melt roll coaster set-up was used. The melt was fed to the melt coater at a temperature of 175°C. The trial yielded a coating weight of 100 g/m² on textile at a line speed of 12 m/min. at about 20% lower nip pressure than used to product 150 g/m² coat weight of polymer 2 at a line speed of 10 m/min.

### EXAMPLE 1 (not according to the invention)

In this Example 11, two commercial calender grade TPU polymers were obtained from Lubrizol Advanced Materials, Inc. One TPU polymer was known as Estane® 54640 NAT 031 (polyether TPU) and the second TPU polymer was known as Estane® 54600 NAT 021 (Polyester TPU). The two polymers were blended in a 90/10 (54640 NAT 031/54600 NAT 021) mixture and an 80/20 mixture. The mixtures were evaluated against 100% Estane® 54640 NAT 031, which was the majority polymer in the two blends. A three roll calender coater was used for the evaluation. A speed of 4 m/min. and a coating thickness of 250 µm were used. The results showed that the control (Estane® 54640 NAT 031) had matt and glossy streaks in the coating and required re-embossing in an additional pass to make acceptable coating: The 90/10 mixture, of TPUs was much improved, but still had some streaks visible. Re-embossing was still required to make a high quality coating.

The 80/20 mixture of TPUs gave a high quality coating free of matt and glossy streaks and did not require re-embossing.

### EXAMPLE 12 (not according to the invention)

In this Example 12, a single TPU polymer was made which had the same composition as the blend of polymers. That is, the two different polyols were mixed together and reacted with 1,4-butanediol and MD1 to create a single TPU polymer with the same composition as the blend of two different TPU polymers.

The single TPU polymer processed very much like the comparative examples above, which used one polymer. The processing benefits exhibited by the TPU, blends of this invention (lower coating weight, faster speed, and deflect free) were not observed in the single TPU which had the same chemical composition, This is very surprising results and shows there are processing synergies obtained by blending two TPU polymers in the melt coating process.

### EXAMPLE 13

In this Example 13, a 50/50 blend was used of TPU polymer 1 (polyether TPU made with a 2000 Mn PTMEG polyol) and TPU polymer 2 (polyether TPU made with a 1000 Mn PTMEG polyol). The pellets of the two TPU polymers were dry blended to form the TPU composition. The blend was melt coated on fabric at a coating thickness of 120 µm with good results. A composition containing only TPU polymer 2 was not able to make acceptable coatings of less than 150 µm.

## Claims

1. A thermoplastic polyurethane (TPU) composition comprising a blend of two or more fully formed TPU polymers, said blend comprising
a first fully formed TPU polymer and a second fully formed TPU polymer; wherein both said first TPU polymer and said second TPU polymer have a soft segment and a hard segment and said first and second TPU polymers are both derived from the reaction of:
(a) at least one hydroxyl terminated intermediate to form said soft segment;
(b) at least one chain extender; and
(c) at least one diisocyanate, wherein said hard segment is formed by said chain extender and said diisocyanate; and wherein said first and said second fully formed TPU polymers are both polyether TPU polymers, and wherein said first fully formed TPU polymer was made with a 2000 Mn hydroxy terminated intermediate and said second fully formed TPU polymer was made with 1000 Mn hydroxy terminated intermediate, and said composition is formed from a 50/50 blend of said first and said second fully formed TPU polymers.

2. The TPU composition of claim 1, wherein said chain extender is selected from the group selected from straight chain glycols having from 2 to 8 carbon atoms.

3. The TPU composition of claim 1, wherein said diisocyanate is 4,4'-methylene bis-(phenyl isocyanate).

4. A process for producing a thermoplastic polyurethane (TPU) film by either melt coating or calendering the TPU composition as defined in any of claims 1 to 3.

5. A process for producing a coated fabric comprising coating a fabric substrate with a melt of the thermoplastic polyurethane (TPU) composition as defined in any of claims 1 to 3 to form a coating film of TPU on said fabric substrate.

6. The process of claim 5, wherein said coating film of TPU has a thickness of from 25 µm to 400 µm, or wherein said coating film of TPU has a thickness of from 90 µm to 350 µm.

7. The process of claim 5, wherein said coating step is performed in one pass through said coating operation.

8. The process of claim 5, wherein said fabric is made from fibers selected from the group consisting of organic fibers and inorganic fibers.

9. A coated fabric article comprising a fabric substrate and a topcoat of thermoplastic polyurethane (TPU) polymer film made from the TPU composition as defined in any of claims 1 to 3.

10. The article of claim 9, wherein said coating film of TPU has a thickness of from 25 µm to 400 µm, or wherein said coating film of TPU has a thickness of from 90 µm to 350 µm.

11. The article of claim 9, wherein said fabric is made from fibers selected from the group consisting of organic fibers and inorganic fibers.

12. The article of claim 9, wherein said article is selected from the group consisting of flexible containers, inflatable life vests, inflatable rafts, conveyor belts, inflatable air mattresses, printing blankets, and adhesive laminates.

## Patentansprüche

1. Thermoplastische Polyurethan(TPU)-Zusammensetzung, die ein Gemisch von zwei oder mehr voll ausgebildeten TPU-Polymeren umfasst, wobei das Gemisch Folgendes umfasst:
ein erstes voll ausgebildetes TPU-Polymer und ein zweites voll ausgebildetes TPU-Polymer;
wobei sowohl das erste TPU-Polymer als auch das zweite TPU-Polymer ein weiches Segment und ein hartes Segment aufweisen und das erste und das zweite TPU-Polymer beide aus der Reaktion von
(a) wenigstens einem hydroxyterminierten Zwischenprodukt unter Bildung des weichen Segments;
(b) wenigstens einem Kettenverlängerer; und
(c) wenigstens einem Diisocyanat
stammen, wobei das harte Segment von dem Kettenverlängerer und dem Diisocyanat gebildet wird; und wobei das erste und das zweite voll ausgebildete TPU-Polymer jeweils Polyether-TPU-Polymere sind und wobei das erste voll ausgebildete TPU-Polymer mit einem hydroxyterminierten Zwischenprodukt mit einem Mn von 2000 hergestellt wurde und das zweite voll ausgebildete TPU-Polymer mit einem hydroxyterminierten Zwischenprodukt mit einem Mn von 1000 hergestellt wurde und die Zusammensetzung aus einem 50/50-Gemisch des ersten und des zweiten voll ausgebildeten TPU-Polymers gebildet wird.

2. TPU-Zusammensetzung gemäß Anspruch 1, wobei der Kettenverlängerer aus der Gruppe ausgewählt ist, die aus geradkettigen Glycolen mit 2 bis 8 Kohlenstoffatomen besteht.

3. TPU-Zusammensetzung gemäß Anspruch 1, wobei es sich bei dem Diisocyanat um 4,4'-Methylenbis(phenylisocyanat) handelt.

4. Verfahren zur Herstellung eines thermoplastischen Polyurethan(TPU)-Films entweder durch Schmelzbeschichtung oder durch Kalandern der TPU-Zusammensetzung, wie sie in einem der Ansprüche 1 bis 3 definiert ist.

5. Verfahren zur Herstellung eines beschichteten Textilstoffs, umfassend das Beschichten eines Textilstoffsubstrats mit einer Schmelze der thermoplastischen Polyurethan(TPU)-Zusammensetzung, wie sie in einem der Ansprüche 1 bis 3 definiert ist, unter Bildung eines Beschichtungsfilms aus TPU auf dem Textilstoffsubstrat.

6. Verfahren gemäß Anspruch 5, wobei der Beschichtungsfilm aus TPU eine Dicke von 25 µm bis 400 µm hat oder wobei der Beschichtungsfilm aus TPU eine Dicke von 90 µm bis 350 µm hat.

7. Verfahren gemäß Anspruch 5, wobei der Beschichtungsschritt in einem Durchgang durch den Beschichtungsvorgang durchgeführt wird.

8. Verfahren gemäß Anspruch 5, wobei der Textilstoff aus Fasern besteht, die aus der Gruppe ausgewählt sind, die aus organischen Fasern und anorganischen Fasern besteht.

9. Beschichteter Textilartikel, der ein Textilstoffsubstrat und eine Deckschicht aus einem thermoplastischen Polyurethan(TPU)-Film, der aus der TPU-Zusammensetzung, wie sie in einem der Ansprüche 1 bis 3 definiert ist, hergestellt ist, umfasst.

10. Artikel gemäß Anspruch 9, wobei der Beschichtungsfilm aus TPU eine Dicke von 25 µm bis 400 µm hat oder wobei der Beschichtungsfilm aus TPU eine Dicke von 90 µm bis 350 µm hat.

11. Artikel gemäß Anspruch 9, wobei der Textilstoff aus Fasern besteht, die aus der Gruppe ausgewählt sind, die aus organischen Fasern und anorganischen Fasern besteht.

12. Artikel gemäß Anspruch 9, wobei der Artikel aus der Gruppe ausgewählt ist, die aus flexiblen Behältern, aufblasbaren Schwimmwesten, Schlauchbooten, Förderbändern, Luftmatratzen, Drucktüchern und Klebelaminaten besteht.

## Revendications

1. Composition de polyuréthane thermoplastique (TPU) comprenant un mélange de deux ou plusieurs polymères de TPU entièrement formés, ledit mélange comprenant
un premier polymère de TPU entièrement formé et un deuxième polymère de TPU entièrement formé ; ledit premier polymère de TPU et ledit deuxième polymère de TPU comportant tous deux un segment souple et un segment dur et lesdits premier et deuxième polymères de TPU étant tous deux dérivés de la réaction de :
(a) au moins un intermédiaire à terminaison hydroxyle pour former ledit segment souple ;
(b) au moins un allongeur de chaîne ; et
(c) au moins un diisocyanate, dans laquelle ledit segment dur est formé par ledit allongeur de chaîne et ledit diisocyanate ; et dans laquelle lesdits premier et deuxième polymères de TPU entièrement formés sont tous deux des polymères de polyéther TPU, et dans laquelle ledit premier polymère de TPU entièrement formé a été préparé avec un intermédiaire à terminaison hydroxy de Mn 2 000 et ledit deuxième polymère de TPU entièrement formé a été préparé avec un intermédiaire à terminaison hydroxy de Mn 1 000, et ladite composition est formée à partir d'un mélange 50/50 dudit premier et dudit deuxième polymère de TPU entièrement formé.

2. Composition de TPU selon la revendication 1, dans laquelle ledit allongeur de chaîne est choisi dans le groupe constitué des glycols à chaîne linéaire comportant de 2 à 8 atomes de carbone.

3. Composition de TPU selon la revendication 1, dans laquelle ledit diisocyanate est du bis-(phénylisocyanate) de 4,4'-méthylène.

4. Procédé de fabrication d'un film de polyuréthane thermoplastique (TPU) par revêtement à l'état fondu ou bien calandrage de la composition de TPU selon l'une quelconque des revendications 1 à 3.

5. Procédé de fabrication d'un tissu enduit comprenant le revêtement d'un substrat de tissu avec la composition de polyuréthane thermoplastique (TPU) selon l'une quelconque des revendications 1 à 3 à l'état fondu pour former un film de revêtement de TPU sur ledit substrat de tissu.

6. Procédé selon la revendication 5, dans lequel ledit film de revêtement de TPU a une épaisseur de 25 µm à 400 µm, ou dans lequel ledit film de revêtement de TPU a une épaisseur de 90 µm à 350 µm.

7. Procédé selon la revendication 5, dans lequel ladite étape de revêtement est réalisée en une seule passe lors de ladite opération de revêtement.

8. Procédé selon la revendication 5, dans lequel ledit tissu est fabriqué à partir de fibres choisies dans le groupe constitué des fibres organiques et des fibres inorganiques.

9. Article comprenant un tissu enduit comprenant un substrat de tissu et une couche supérieure constituée d'un film polymère de polyuréthane thermoplastique (TPU) fabriqué à partir de la composition de TPU selon l'une quelconque des revendications 1 à 3.

10. Article selon la revendication 9, dans lequel ledit film de revêtement de TPU a une épaisseur de 25 µm à 400 µm, ou dans lequel ledit film de revêtement de TPU a une épaisseur de 90 µm à 350 µm.

11. Article selon la revendication 9, dans lequel ledit tissu est fabriqué à partir de fibres choisies dans le groupe constitué des fibres organiques et des fibres inorganiques.

12. Article selon la revendication 9, dans lequel ledit article est choisi dans le groupe constitué des récipients flexibles, des gilets de sauvetage gonflables, des radeaux gonflables, des courroies transporteuses, des matelas pneumatiques gonflables, des toiles d'impression et des stratifiés adhésifs.
